# EUROPEAN PATENT SPECIFICATION

(11) **EP 2 327 916 B1**
(45) Date of publication and mention of the grant of the patent: **27.11.2013**
(21) Application number: 10191311.9
(22) Date of filing: 16.11.2010
(51) Int. Cl.: F16L 25/01, F16L 37/32

(54) **Connection system for feeding fluids**
Verbindungssystem für Versorgungsleitungen
Système de raccord pour conduits d'alimentation

(30) Priority: 25.11.2009 IT TO20090911
(43) Date of publication of application: 01.06.2011
(73) Proprietor: Indesit Company S.p.A., 60044 Fabriano (AN) (IT)
(72) Inventor: Palmeto, Stefano, 15100 Alessandria (IT); Gasparini, Alberto, 60044 Fabriano (AN) (IT); Mazzucchelli, Renato, 25124 Brescia (IT)
(74) Representative: Santonicola, Paolo

(56) References cited:
- EP-A1- 2 085 677
- DE-A1-102007 041 110
- DE-A1-102009 019 783
- DE-B1- 2 037 725
- GB-A- 2 447 310
- US-A1- 2009 123 221

## Description

The present invention relates to a connection system for feeding a fluid, e.g. for feeding a fluid to an appliance, in particular a household appliance, preferably a cooking appliance.

In the field of fluid-feeding connection systems, a number of solutions have been developed over time in which the connection system normally comprises a first male connector and a second female connector engaging together.

One of the two connectors usually comprises a shutter which is opened when the other part is engaged, thereby opening a passage for the fluid.

One problem of these solutions is that the feeding of the fluid in the duct on which the connection system is arranged must necessarily follow the engagement of the two connectors, this being a requirement for on-off valves.

In the solutions known in the art, furthermore, the user is typically forced to perform a first engagement manoeuvre, possibly followed by another manoeuvre for locking both connectors in the engaged condition.

It is a first object of the present invention to provide a connection system for feeding fluids which can overcome these drawbacks.

The problems related to ensuring an effective seal are felt even more if the fluid is a pressurised gas, especially when it is inflammable.

In general, in fact, in the field of cooking appliances it is necessary to feed the gas heating elements (such as burners) with a fluid (typically gas) as well as to provide in their proximity an electric supply which is required, for example, to supply power to the piezoelectric element that generates the spark for igniting the gas burner, or more in general to supply power to other devices, such as, for example, a control system or the like.

Fore safety reasons, the gas and electric connections are normally located far from each other, and therefore a user wanting to connect a cooktop will have to make said two connections separately.

It is another object of the present invention to provide a connection system for feeding fluids to cooking appliances which can overcome this drawback.

It should also be taken into account that so-called "modular" cooking appliances are known in the art which are even more critical as far as the gas and electric connections are concerned.

In the present description and in the appended claims, the term "modular cooking appliance" refers to a cooking appliance provided with heating elements arranged individually or in groups on modules which can be assembled together.

One particular type of these cooktops is described in Italian patent application TO2008A000299 of 16.04.2008 in the name of the present Applicant.

Said appliance comprises at least two modules, each provided with a body intended for being laid on a support surface; one heating element is associated with each body, and the latter can be pivoted about an axis between an operating condition wherein it rests on said support surface and an idle condition wherein it is separated from said support surface; the modules rotate about a common horizontal axis and are supplied in series with gas and electricity.

In principle, the heating element may be of any kind, e.g. an electric or gas element.

In this type of modular cooking appliances, the electric terminals of an already connected module are live, whereas those of a module being connected are not, with the risk of starting a fire should the electric terminals shoot a small arc or a spark in the presence of a gas leak.

Moreover, the gas connection takes place between an module which is already being supplied and another module which is not yet supplied, thus making the risk of small gas leaks quite concrete.

The steps for connecting one module to an adjacent one, which imply the connection of both the gas and electric supplies, are therefore relatively complex and time-consuming, due to the risk deriving from gas inflammability.

Yet another object of the present invention is to provide a connector for cooktops which can overcome this drawback.

The present invention relates to a connection system for feeding fluids as set out in claim 1 and to a cooking appliance comprising such a connector. A similar connection system is e.g. shown in document DE 102007041110 A1.

The idea at the basis of the present invention is to provide a connection system for feeding fluids, in particular intended for cooking appliances, of the type comprising a first and a second connectors which can be engaged together in order to establish the fluidic connection, wherein the first and second connectors comprise first and second shutters which are movable for opening a passage for a fluid once a closed duct has been formed for said fluid.

In this manner, any risk of fluid leakage is advantageously eliminated or reduced.

According to the invention, the two connectors respectively comprise first and second electric terminals adapted to be placed in a condition of mutual electric contact when the two connectors are engaged.

This makes feeding the appliance, e.g. a cooktop, simpler, because through a single connection step it is possible to connect both the gas supply and the electric supply.

Furthermore, according to the invention, the electric terminals are placed in a condition of mutual contact when the first and second fluid passages of the first and second connectors have been sealingly coupled together.

This ensures that, when electric contact is established between the terminals, the two parts of the gas duct are properly coupled to each other, thus preventing any gas leaks.

The connection system for feeding fluids according to the present invention also has other advantageous features; for example, the first and second fluid passages are closed by two respective shutters which can only be moved in order to open the corresponding passage when the first and second connectors have been properly engaged together; this advantageously ensures that gas can only flow when no leaks are possible.

Aiming at attaining an extremely strong and yet simple construction, the first shutter is made to open the respective passage by fixed components comprised in the second connector and, likewise, the second shutter is made to open the respective passage by fixed components comprised in the first connector.

The connection system for feeding fluids also advantageously comprises movable locking means which lock the engagement and bring the electric terminals near to each other, so as to ensure that, once the electric contact has been established between the latter, the connectors cannot be disconnected, which would otherwise result in a gas leak.

Further advantageous features of the invention will be set out in the appended claims, which are intended as an integral part of the present text.

These features as well as further advantages of the present invention will become apparent from the following description of an embodiment thereof as shown in the annexed drawings, which are supplied by way of non-limiting example, wherein:
Fig. 1 shows a modular cooking appliance provided with a connector according to the present invention;

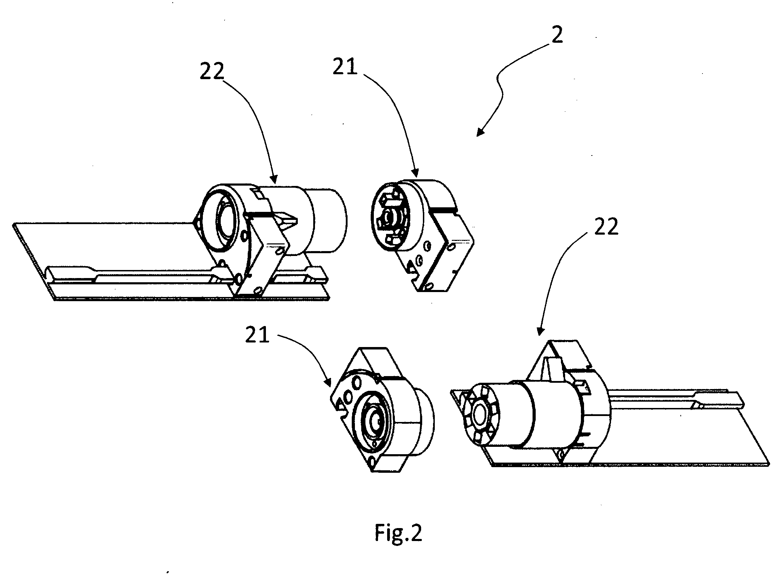

Fig. 2 shows two different perspectives of the connector of Fig. 1;
Fig. 3 is a sectional view of the connector of Fig. 1 in the decoupled condition;
Fig. 4 is a sectional view of the connector of Fig. 1 in the coupled condition;
Fig. 5 is an axonometric view of that part of the connector of Fig. 1 which is used for the fluidic connection, sectioned along a longitudinal plane;
Fig. 6 is a sectional view of the connector part of Fig. 5;
Fig. 7 is an exploded view of the connector part of Fig. 5;
Fig. 8 is a sectional view of the connector part of Fig. 5 in the decoupled condition;
Fig. 9 is a sectional view of the connector part of Fig. 5 in the coupled condition;
Fig. 10 is an exploded axonometric view of that part of the connector of Fig. 1 which is used for the electric connection;
Figs. 11 and 12 show a detail of the connector of Fig. 1;
Fig. 13 shows a variant of a detail of the connector of Fig. 1;
Figs. 14 to 17 show a cinema-like sequence of four successive instants of the step of coupling or engaging the connector of Fig. 2.

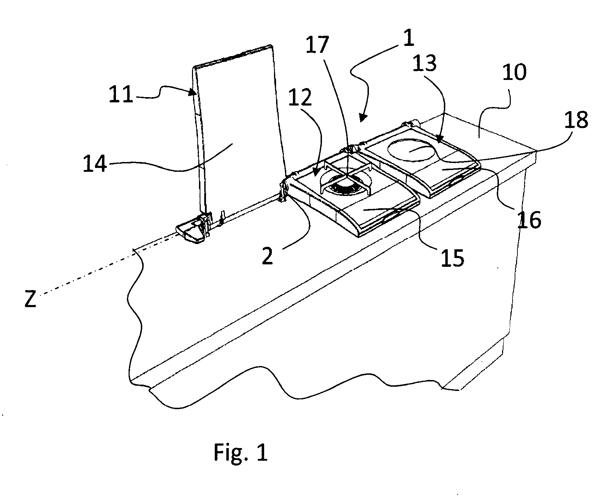

Fig. 1 shows an example wherein a connection system for feeding fluids 2 according to the present invention is mounted on a cooking appliance 1 of the above-described modular type.

It must be pointed out right away that, in general, the connection system 2 may also be installed on other types of cooking appliances, e.g. non-modular ones, or on different devices or apparatuses for the purpose of defining a passage for a fluid.

The connection system 2 comprises a first 21 and a second 22 connectors which can be engaged together in order to establish the fluidic connection.

The modular cooking appliance 1 of Fig. 1 may comprise two or more modules interconnected in series, e.g. three modules 11,12,13 as shown, each having a body 14,15,16 intended for being laid on a common support surface 10, such as, for example, the top of a kitchen cabinet.

Each body 14, 15, 16 is provided with a heating element, e.g. a gas burner 17 or an electric plate 18.

Each body 14, 15, 16 can be pivoted about the axis Z between an operating condition wherein it rests on the support surface 2 (like the modules 12 and 13) and an idle condition wherein it is separated from said support surface 2 (like the module 11).

The modules 11, 12, 13 are supplied in series with gas and electricity at the common horizontal axis of rotation Z.

The series supply requires that one of the outermost modules (in this example 11) is connected to the gas distribution network and to the electric mains and feeds the module 12 immediately adjacent thereto, which in turn feeds in cascade the downstream module, i.e. the module 13 in this example.

It must be pointed out right away that, of course, there may be any number of modules equipped with equal or different heating elements, without however departing from the scope and teachings of the present invention.

For clarity, it is assumed herein that all modules must be supplied with both a combustible fluid, i.e. gas, and electricity.

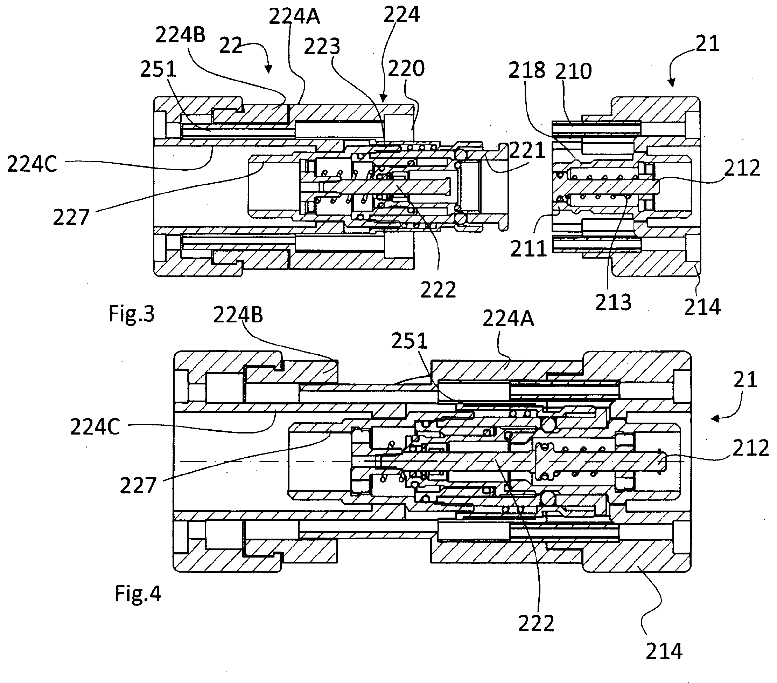

For the purpose of allowing a fluid, such as, by way of non-limiting example, a gas, to be fed, a connection system for feeding fluids 2 according to the present invention, as shown in Figs. 3 and 4, is mounted on two adjacent modules.

The connection system 2 comprises a first 21 and a second 22 connectors adapted to be coupled together.

The first 21 and the second 22 connectors are positioned each on a different module; for example, the first connector 21 is placed on the module 13 and the second connector 22 is placed on the module 12 (or, likewise, on the modules 12 and 11, and so on for a larger number of modules).

Each module is therefore preferably associated with a first 21 and a second 22 connectors adapted to be engaged together in order to establish the fluidic (gas) connection and, according to a further improvement, possibly also the electric connection, as will be explained more in detail hereafter.

To this end, the connection system 2 is equipped with connection means for a fluid which will be described below.

In particular, as will be described in the following paragraphs, the connection system 2 is fitted with two shutters, each mounted on one connector 21, 22 and adapted to open or close in a substantially simultaneous manner the fluid passage in the respective connector.

More in particular, said passage is only opened once an outward-directed duct has been formed, thus preventing or anyway limiting any possible gas or fluid leak as the shutters are opened.

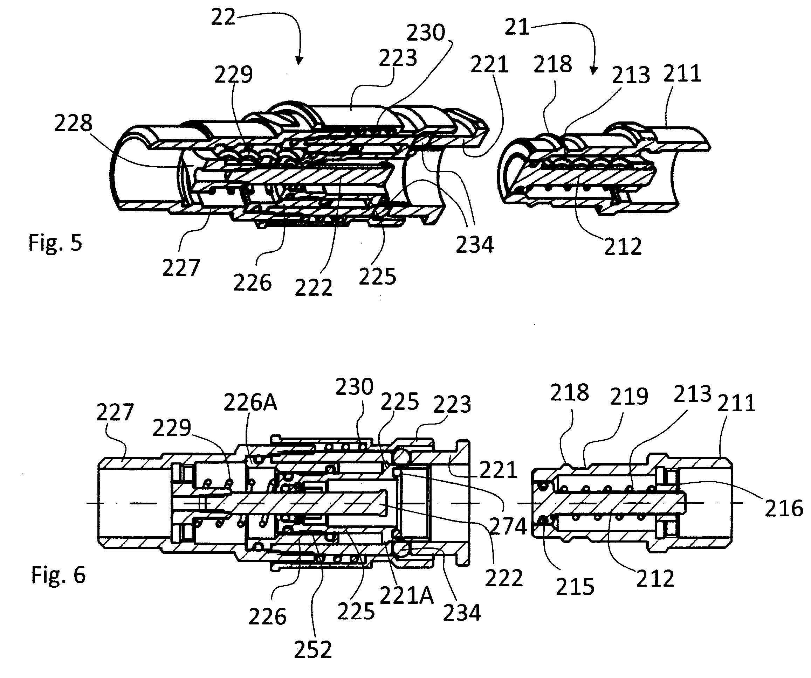

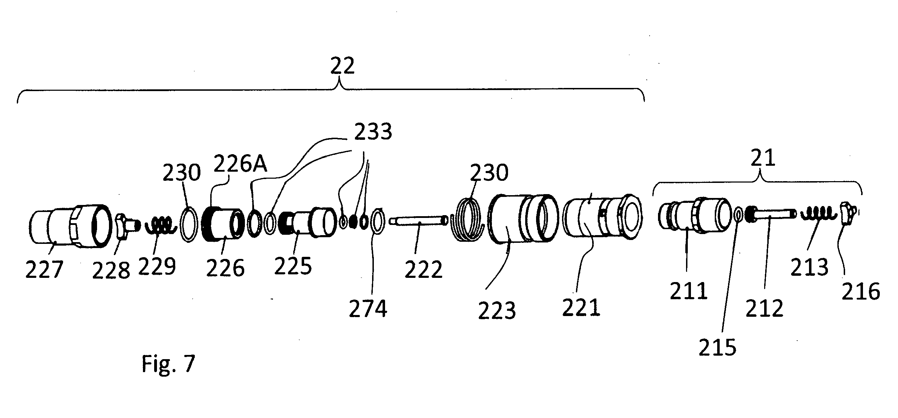

Let us first analyse the fluidic connection means, which are shown integrated in the connection system assembly in Figs. 3 and 4 and alone in Figs. 5, 6 and 7 in order to make this description easier to understand.

As regards the first connector 21 (on the right in the drawings), it comprises a first duct part 211 for a fluid such as a gas, whose passage section is intercepted by a shutter 212.

The latter, when the connection system 2 is in the decoupled condition (i.e. when the first 21 and second 22 connectors are not engaged, as shown by way of example in Figs. 5 and 6), is kept in a condition wherein the spring 213 closes the fluid passage.

On one side, the spring abuts on the head of the movable shutter 212, while on the other side it is stopped by a striker 216 integral with the first duct part 211.

At the terminal end of the shutter 212 there is a gasket 215 radially abutting on the inner wall of the first duct part 211, thus ensuring a sealed connection between the two parts and a proper interception of the fluid.

The outer surface of the first duct part 211 also has an annular engagement edge 218, the purpose of which is to allow the engagement to be locked, as will be described later on.

The first duct part 211 is preferably made of metal and is inserted into a first connector body part 214, which may be made of plastic.

As regards the fluidic connection means of the second connector part 22, these comprise: a second duct part 221, arranged concentrically around a thrust pin 222.

Concentrically around the latter there are also an inner piston 225, an inner bushing 226, an outer tubular portion 227, and an outer ring nut 223.

The thrust pin 222 is secured to the outer tubular portion 227 through interference fit with a fixing element 228 having for example a lobed profile, as shown in the example of the annexed drawings, so that between the fixing element 228 and the outer tubular portion 227 there is at least one empty space which can be used as a passage for the fluid.

The second duct part 221, the outer tubular portion 227, the inner bushing 226, the pin 222, and the fixing element 228 are fixed relative to one another.

In the example provided herein, they are separate parts assembled and fixed together, but as an alternative they may be provided as one piece.

The second duct part 221 is plugged into the outer tubular portion 227, and between the two there is the radial relief 226A of the inner bushing 226, which thus stays fixed in position with respect to both the second duct part 221 and the outer tubular portion 227.

The inner bushing 226 has at least two portions having a different diameter, i.e. a portion facing the outer tubular portion 227 having a greater diameter and a portion facing the opposite side having a smaller diameter, for reasons that will be clarified below.

A passage for the fluid is thus defined all around the thrust pin 222.

The passage for the fluid is in fact obtained inside the hollow portion defined by the outer tubular portion 227, the inner bushing, and the second duct part 221.

The inner piston 225 is free to slide in the longitudinal direction, and is held in position by the spring 229, which pushes it, in the direction opposite to that of the terminal tubular portion 227, in abutment with the second duct part 221, which for this purpose is provided with an inward-projecting engagement edge 221A.

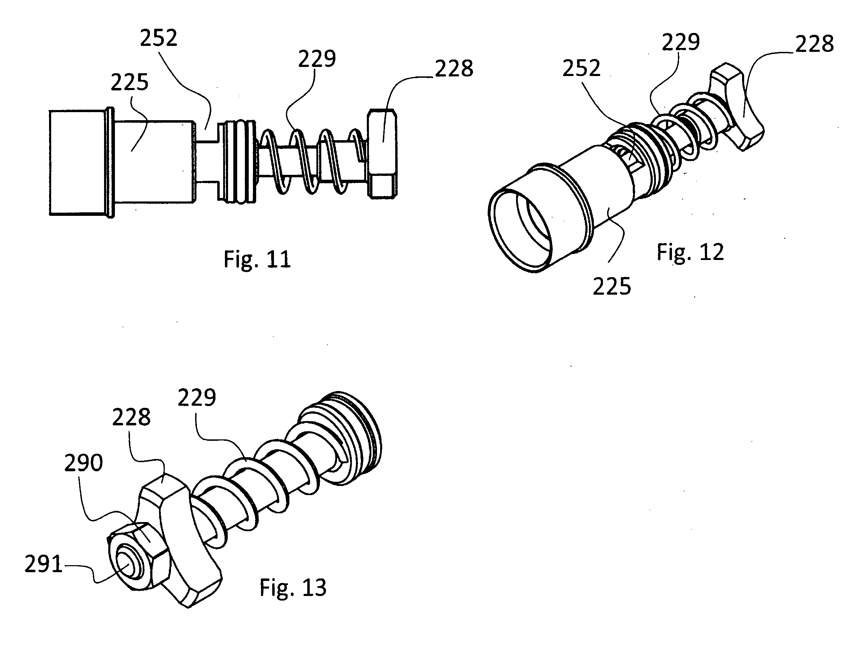

The fixing element 228 for the thrust pin 222 acts as a striker for the terminal portion of the spring 229. The inner piston 225 is the shutter of the second connector 22; in fact, it opens or closes the radial gas passages 252 shown in detail in Figs. 11 and 12, thereby putting the terminal tubular portion 227 in fluidic communication with the second duct part 221.

More specifically, when the connector is in the decoupled condition, the inner piston 225 is pushed by the spring 229 towards the second duct part 221 and closes the radial gas passages 252, which in this condition face directly the inner wall of the bushing 226 in the portion thereof having the smaller diameter, as can be seen in Figs. 5 and 6.

In the coupled condition, instead, the inner piston is pushed backwards and compresses the spring 229 towards the terminal tubular portion 227, thus opening the radial passages 252, which in this situation face the inner wall of the bushing 226 in the portion thereof having the greater diameter.

The outer ring nut 223 is arranged concentrically outside the second duct part 221 and the terminal tubular portion 227, and is also free to slide with respect thereto and held in abutment in the direction opposite to that of the terminal tubular portion 227 by the spring 230, which is secured between the outer ring nut 223 and the terminal tubular portion 227.

The stopping action necessary for preventing the outer ring nut 223 from coming off is ensured by movable locking means, which in the present example consist of locking balls 234 housed in suitable seats obtained on the second duct part 221.

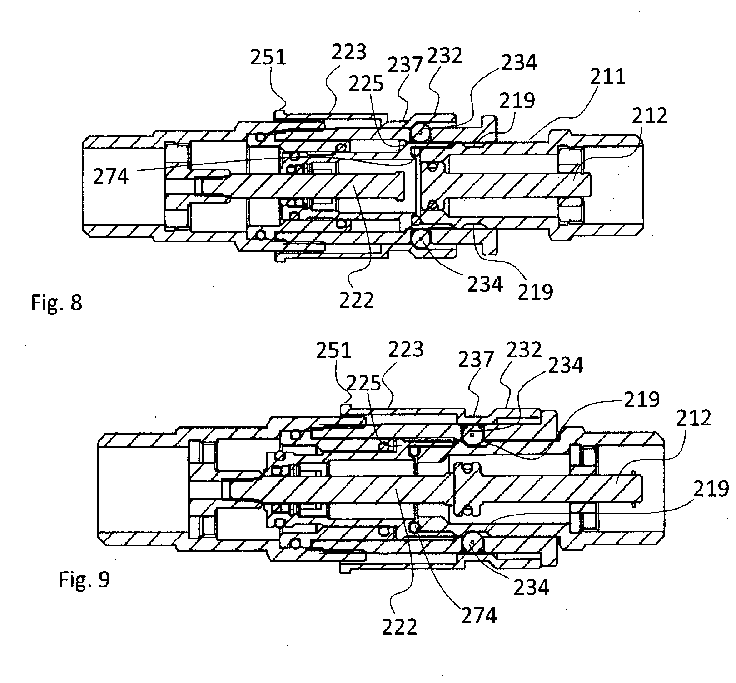

Advantageously, the locking balls 234 also perform the additional function of locking the coupling between the first connector 21 and the second connector 22, as will be described later on with reference to Fig. 9.

Among the various parts, there are also gaskets 233, e.g. O-rings, to improve the sealing and avoid gas leaks.

If, due to production requirements, some integral components are subdivided into a number of subparts, additional gaskets may be employed between said subparts.

This implementation of the connection means for a fluid of the first 21 and second 22 connectors provides a snap-on engagement of the latter and the simultaneous opening of the gas passage.

In short, the connection means which enable the fluid flow comprise, for each part 21, 22 of the connector 2, a fixed thrust component and a movable component acting as a shutter which, once the coupling has been accomplished, is made to open a fluid passage section by the action of the thrust component.

Prior to bringing the shutters into the open condition, a sealed connection is established between the first 211 and second 221 duct parts, so as to advantageously avoid any fluid leaks to the outside by preventing the fluid passage from opening before the two connectors 21 and 22 have been properly engaged.

More in detail, as will be explained below, the thrust component for the first connector 21 is the very same first duct part 211 that presses against the inner piston 225 and counters the action of the spring 229, thereby causing the piston to move back, whereas for the second connector 22 it consists of the thrust pin 222, which presses against the shutter 212 and counters the action of the spring 213, thereby causing the shutter to move back.

Figs. 8 and 9 show the gas connection means in the decoupled and coupled conditions, respectively.

It can be noted that in Fig. 8, notwithstanding the first connector 21 has been partially plugged into the second connector 22, the thrust components (i.e. the first duct part 211 and the fixed pin 222) are not yet in abutment with the respective movable components (i.e. the inner piston 225 and the shutter 212), while the duct in which the shutters 225 and 212 will be opened has already been formed, so that when they are opened no fluid can leak to the outside.

As can be seen, in fact, in Fig. 8 the shutters 225 and 212 are still closing the fluid passage, while the first duct part 211 has already entered the second duct part 221.

During the step in which the two connectors are engaged, in fact, the respective gas passages stay closed until the two parts 21 and 22 are fully and correctly coupled together, due to the fact that:
- in the first connector 21, the shutter 212 is held in the condition wherein the passage is closed by the spring 213,
- in the second connector 22, the piston 215 is held in the condition wherein the passage is closed by the spring 229,
as shown in Fig. 8.

Fig. 9 shows a subsequent instant of the engagement step, wherein the proper coupling between the two connectors 21 and 22 has allowed the fluid passage to be opened.

In this case, in fact, the fixed pin 222 is in contact with the head of the shutter 212 and counters the action of the spring 213, thereby pushing the shutter 212 and causing it to open the passage section of the first duct part 211.

The latter is in contact with the inner piston 225 and counters the action of the spring 229, thereby pushing the inner piston 225 and causing it to open the gas passage section.

In substance, the step of engaging the first and second connectors performs a stroke which can be subdivided into at least two steps:
a. a preliminary step of forming a closed duct
b. opening two shutters within the closed duct in order to allow the fluid to flow through.

Step a. occurs at an initial instant, when the free edge of the first duct part 211 abuts on the gasket 274 provided inside the hollow head of the piston 225.

Starting from that instant, in order to open the fluid passage it is necessary to apply a force to counter that of the spring 229.

During this step the compression advantageously increases, which improves the sealing effect of the gasket 274 before the fluid passage is opened, thus ensuring optimal tightness.

The applied force pushes the piston 225 back and, essentially simultaneously, the thrust pin 222 meets the shutter 212.

When the insertion force is further increased, the thrust pin 222 pushes the shutter 212 back until it causes the displacement necessary for allowing the fluid to pass.

It is therefore necessary to continue to exert an increasing insertion force until the first connector 21 is fully inserted and the locking balls 234, constantly pushed by the outer ring nut 223 and by the spring of the ring nut 230, lock the coupling securely by engaging respective housings obtained on the first duct part 211, in particular in the form of restrictions of the latter's outside diameter.

In this position the fluid is allowed to flow and, at the same time, the two connectors 21 and 22 are engaged but can still rotate about their own axis.

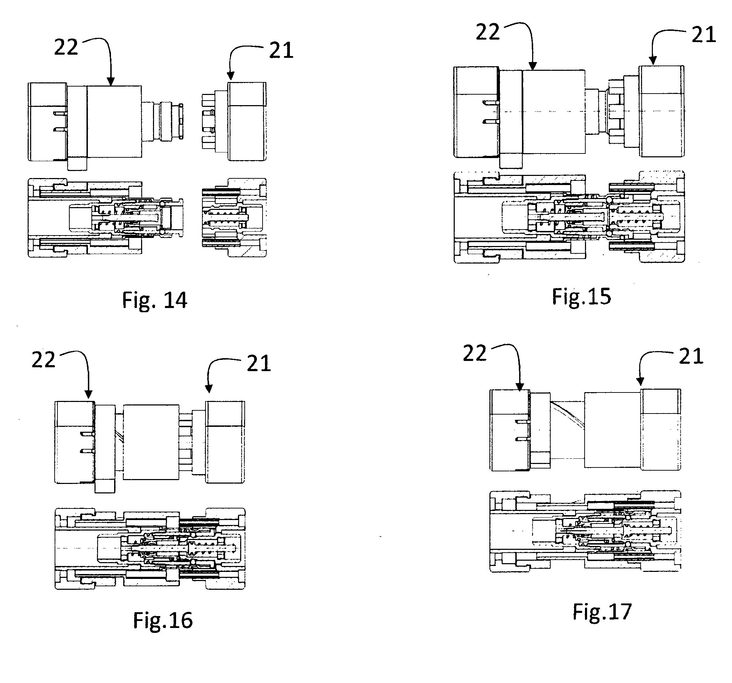

These steps are clearly visible in Figs. 14 to 16, which show three successive instants of the coupling or engagement step.

In particular:
- in Fig. 14 the two connectors 21 and 22 are decoupled and the shutters 225 and 212 are closing the fluid passage;
- in Fig. 15 the two connectors 21 and 22 are in a position such that the closed duct is formed between the first and second connectors 21 and 22, but the shutters 225 and 212 are still closing the fluid passage;
- in Fig. 16 both shutters 225 and 212 are opening the fluid passage and the engagement is locked.

As far as the locking of the engagement is concerned, this is made possible by the fact that the annular engagement edge 218 of the first duct part 211 surpasses the locking balls 234.

The latter, in fact, as can be understood by comparing Fig. 8 with Fig. 9, are movable radially in their seat on the second duct part 221, so as to prevent the first duct part 211 from coming off thanks to their cooperation with the ring nut 223.

The latter has, for this purpose, a cylindrical body with a widened terminal edge 232 followed by an inner groove 237.

In the decoupled condition, as shown in Fig. 8, the locking balls 234 are retained in the outermost position by the edge of the inner piston 225 and abut against the step between the widened terminal edge 232 and the inner groove 237 of the ring nut 223, thereby preventing the latter from sliding out and countering the action of the spring 230.

In the coupled condition, as shown in Fig. 9, the free edge of the first duct part 211 engages into the piston 225, until the annular engagement edge 218 abuts on the piston 225 itself.

A further axial movement pushes back the piston 225, thereby countering the action of the spring 229, until the annular engagement edge 218 surpasses the locking balls 234, as shown in Fig. 9.

On the first duct part 211, in a region immediately adjacent to the annular engagement edge 218, there is an annular hollow 219 that partially houses the locking balls 234, which move inwards under the thrust exerted by the inner groove 237 of the ring nut 223 which, being no longer locked by the balls 234, is free to move axially forwards under the action of the spring 230, thereby pushing the locking balls 234 partially into the annular hollow 219, thus locking the first duct part 211 because the balls are partially inside the annular hollow 219 and partially inside their seat on the second duct part 211.

In this condition the ring nut 223 abuts against the radial step 239 projecting outwards at the free edge of the second duct part 221, thus remaining firmly in that position (wherein it locks the balls 234 in the annular hollow 219).

A snap-on engagement is thus obtained between the first 21 and the second 22 connectors, through which, by means of just one movement, i.e. by engaging the parts by means of a simple axial movement in concurrent directions, the duct for the fluid is formed, the gas passage sections are opened, and the engagement is locked so that no parts can come off.

In this regard, it must be pointed out that in order to decouple the connectors 21 and 22 it is sufficient to do as follows: move the ring nut 223 back towards the outer tubular portion 227, thereby countering the action of the spring 230.

The axial movement of the ring nut 223 in the direction of the outer tubular portion 227 may be obtained by acting upon the raised edge 251, shown in Figs. 8 and 9, as will be described hereafter.

This action causes the widened terminal edge 232 to overlap the seat that houses the balls 234, which are then free to move radially outwards under the thrust of the edge of the piston 225, which is forced forwards by the spring 229, thus coming out of the annular hollow 219 and releasing the first duct part 211 from its engagement with the connector 22.

It is thus possible to make an axial movement in opposite directions in order to disconnect the two connectors 21 and 22. Said axial movement is accompanied by an axial movement of the piston 225 and of the shutter 212, which are pushed by the respective springs 229 and 213 and are thus made to close the gas passage section, thus reversing the opening action already described.

Advantageously, therefore, the engagement can be unlocked by simply acting upon the outer ring nut 8.

In fact, when the outer ring nut 223 is pushed backwards, the locking balls 234 are pushed into their initial position by the force exerted by the spring 229.

The extension of the springs 229 overcomes the countering action of the spring 230 and moves the first duct part 211 back into the decoupled position while at the same time resetting the position of the shutters 225 and 212, thereby stopping the fluid flow.

Therefore, the connection system for feeding a fluid 2 described so far provides many advantages.

In the first place, it provides a very good seal, is capable of reducing or eliminating any fluid leaks as the connection is being made, and is both simple and strong.

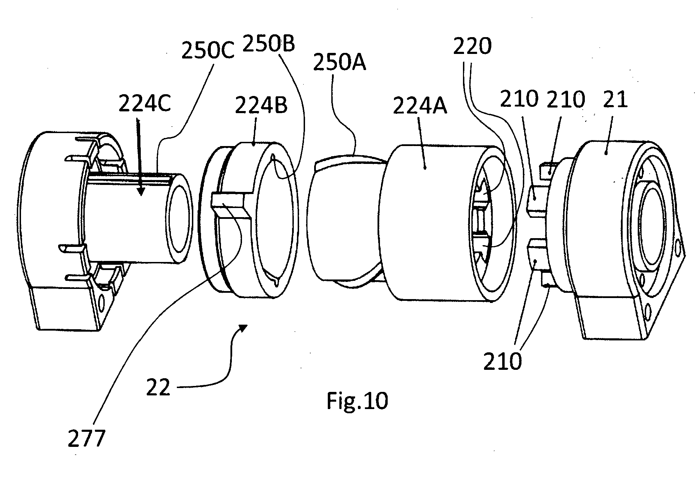

In an improved embodiment, the connection system for feeding a fluid 2 also comprises electric connection means like those shown in the already mentioned Figs. 3 and 4 and in Fig. 10.

In general, the connection system for feeding a fluid 2 is designed in a manner such that, advantageously:
- during the step of engaging the two connectors 21 and 22, the electric connection means are coupled together only after coupling the fluid connection means
- during the step of disengaging the two connectors 21 and 22, the electric connection means are decoupled before decoupling the fluid connection means.

Furthermore, advantageously, when the fluid connection means are switched from the coupled condition to the decoupled condition or vice versa, the electric terminals of the electric connection means are kept at a distance such that formation of arcs or sparks is prevented, thereby avoiding that, if the fluid is inflammable, a small leak might start a fire.

Let us first analyse the connector 21; it comprises insulated male electric terminals 210 integral with the body 214 and adapted to be connected to the electric apparatuses of the respective module to be supplied with electric current.

Of course, it should be pointed out beforehand that the electric terminals may without distinction be male, female, hermaphroditic or of any other kind (e.g. flat) without departing from the scope of the present invention.

The body 214 and the male terminals 210 are fixed.

As can be seen in Figs. 3 and 4, the male electric terminals 210 can be arranged concentrically (e.g. six terminals) around the first duct part 211, which has already been described; they extend from the body 214 so as to protrude less than the first duct part 211 when the first and second connectors 21, 22 are decoupled.

As far as the second connector 22 is concerned, it comprises a second body part 224 which in turn comprises an axially movable annular coupling flange 224A, a rotatable annular element 224B and a fixed support 224C.

The second connector 22 also comprises female electric terminals 220 mounted on the annular coupling flange 224A.

The latter has an internal helical toothing 250A adapted to engage with the external helical guide 250B provided on the rotatable annular element 224B, which is free to rotate relative to the fixed support 224C.

The annular coupling flange 224A is also fitted internally with a linear guide (not shown) which engages with the linear relief 250C provided on a cylindrical extension of the fixed support 224C, which only allows the annular coupling flange 224A to make axial linear movements.

Thus, when the second body part 224 is assembled, by turning the rotatable annular element 224B by means of the gripping lever 277 it is possible to attain a linear and axial movement of the annular coupling flange 224A, which causes the female electric terminals to move axially forwards or backwards, so that they can establish the electric connection with the male electric terminals 210 when they are correctly aligned with and facing the latter.

Advantageously then, the connector 22 is equipped with retaining means (not shown) which can be deactivated manually and which interfere with the movement of the annular coupling flange 224A. With the provision of said retaining means, in fact, said flange 224A is free to advance towards the connector 21 until the gas connection has been completed, after which it is locked by the action of a retaining device, so that the user, in order to complete the connection by moving the coupling flange 224A further on towards the connector 21 and thus make the electric connection, must first deactivate said retaining device.

The retaining device may be, for example, an element overhanging from the fixed part of the connector 22 and acting as a striker for the gripping lever 277. The striking action takes place as the fluid connection is completed. Since the overhanging element is somewhat pliable (e.g. because it is provided in the form of an axially movable plug or a ball countering a spring), the user can release the gripping lever 277 and continue to advance the coupling flange 224A in order to make the electric connection.

As regards the interaction between the electric connection means just described and the gas connection means described earlier, reference will have to made again to Figs. 3 and 4: the raised edge 251 of the ring nut 223 engages the inner wall of the annular coupling flange 224A, so that the ring nut 223 follows the axial motion of the annular coupling flange 224A.

More in particular, the axial displacement of the annular coupling flange 224A (during the decoupling step) can be subdivided into three distinct moments or strokes, each pertaining to a different action:
- a first stroke, preferably equal to approximately one third of the total axial displacement of the annular coupling flange 224A, corresponding to the electric contact being disconnected between the electric terminals;
- a second stroke, preferably equal to approximately one third of the total axial displacement of the annular coupling flange 224A, corresponding to the electric terminals being moved away from each other in order to avoid electric arcs or sparks;
- a third stroke, preferably equal to approximately one third of the total axial displacement of the annular coupling flange 224A, corresponding to the ring nut 223 moving axially towards the outer tubular portion 227 in order to allow the first duct part 211 to be removed from the second duct part 221.

It must be pointed out that the user carries out all three decoupling steps with a single operation (by only acting upon the gripping lever 277), without perceiving the transition from one step to another.

The various electric connection steps are also shown in Figs. 14 to 17.

It should be noted that, as the two connectors 21 and 22 are being engaged, the locking balls 234 are actuated substantially simultaneously with the approach of first 210 and second 220 electric terminals prior to the completion of the electric connection.

The cylindrical extension of the fixed support 224C embraces the outer tubular portion 227 so as to secure it in position and leave it with only the rotational degree of freedom.

The overall operation of the connection system 2 is therefore as follows (with reference to Figs. 14 to 17):

### ENGAGEMENT OR COUPLING STEP:

1. the first 21 and second 22 connectors are placed in front of each other, and the first duct part 211 is engaged into the second duct part 221; this step (described above) opens a gas passage while at the same time ensuring that the two connectors 21 and 22 are locked together.
2. Once the gas connection has been established, the rotatable annular element 224B is turned (e.g. by approx. 30°), which action moves the annular coupling flange 224A axially towards the first part 21, thereby establishing the electric connection between the female terminals 220 and the male terminals 210.

### DECOUPLING STEP:

1. a rotation is imparted to the rotatable annular element 224B, which drags the annular coupling flange 224A into a backward axial movement towards the outer tubular portion 227, which performs the above-described distinct actions: disconnecting the electric terminals, moving away the electric terminals from each other, and moving the ring nut 223 axially towards the outer tubular portion 227, in order to release the first duct part 211 from the second duct part 221 and allow it to be removed.
2. the gas passage is closed and the first duct part 211 is removed from the second duct part 221.

As can therefore be clearly appreciated from the above description, the connector according to the present invention can offer considerable advantages; in fact, the gas passage is only established when it is certain that the electric connectors have been decoupled and moved away from each other, thereby eliminating the risk of formation of arcs which might ignite the gas.

Another remarkable advantage concerns the fact that, during the coupling step, if the gas connection means have not been coupled correctly, the electric connection between the electric terminals cannot be established because the annular coupling flange 224A is prevented from moving axially.

Yet another advantage is that, while still preserving the aforementioned safety features, the connection system can be coupled, or engaged, and decoupled extremely easily and quickly: in fact, such tasks can be accomplished by a user by simply performing two actions, i.e. one corresponding to an axial movement and another corresponding to a rotation.

A further advantage is given by the fact that essentially all the parts making up the connection system 2 have a cylindrical extension about the same axis and therefore, when said connector is installed in modular cooktops like the one previously described, said axis can be made to coincide with the one about which each module can rotate, thereby considerably simplifying the supply system and saving the cooktop thus designed from the risk of a twisted gas hose or twisted electric cables.

Of course, in the light of the teachings contained herein the man skilled in the art may still make many changes, all of which will nonetheless fall within the scope of the present invention.

For example, the positions of the male and female connectors may be reciprocated on the two connectors 21 and 22, or the second duct part 221, the outer tubular portion 227 and the inner bushing 226 may be manufactured as one piece.

Likewise, the springs 213, 229 and 230 may be more generally replaced with elastic elements, such as suitably shaped rubber elastomers or the like.

Yet another variant is the one shown in Fig. 13: in this case, the fixing element 228 is secured to the thrust pin 222 by means of a nut 290 which engages a threaded end 291 of the thrust pin 222, instead of being forced to fit onto it as in the embodiment described above and shown, for example, in Fig. 6. Furthermore, although the connection system 2 has been described herein with reference to a modular cooking appliance, in principle it may be installed on any cooking appliance or any other appliance where a fluid or electricity must be supplied to said appliance or to components thereof.

## Claims

1. A connection system (2) for feeding fluids, of the type comprising a first (21) and a second (22) connectors which can be engaged together in order to establish the fluidic connection, wherein said fluidic connection is obtained through respective passages for said fluid being opened within said first and said second connectors (21,22) by first and second shutters (212, 225) comprised in said first (21) and said second (22) connectors, said shutters being movable for opening said passage once a closed duct has been formed for said fluid, and wherein said first (21) and said second (22) connectors respectively comprise first (210) and second (220) electric terminals adapted to be placed in a condition of mutual electric contact, thus establishing an electric connection,
**characterised in that**
said first (210) and second (220) electric terminals are adapted to be placed in a condition of mutual electric contact when the two connectors (21,22) are engaged.

2. A connection system (2) according to claim 1, wherein said first (212) shutter is made to open the respective passage by fixed components (222) comprised in the second connector (22) and said second shutter (225) is made to open the respective passage by fixed components (211) comprised in the first connector (21).

3. A connection system (2) according to claim 1 or 2, wherein said first and said second connectors (21,22) can be locked in the engaged position by movable locking means (234).

4. A connection system (2) according to claim 3, wherein said locking means (234) are made to lock the engagement between said first (21) and said second (22) connectors substantially simultaneously with said first and said second electric terminals (210,220) being brought near to each other.

5. A connection system (2) according to one or more of the preceding claims, wherein said second connector (22) comprises an annular coupling flange (224A) with which said second electric terminals (220) are associated, which is adapted to move axially at least during a step of decoupling said first connector (21) from said second connector (22), and wherein said axial movement of said annular coupling flange (224A) is subdivided into three distinct moments or strokes:
- a first stroke corresponding to the electric contact being disconnected between said electric terminals (210,220)
- a second stroke corresponding to said electric terminals (210,220) being moved away from each other
- a third stroke corresponding to the engagement between said first (21) and said second (22) connectors being unlocked.

6. A connection system (2) according to the preceding claim, wherein said three strokes are obtained through a single operation carried out by acting upon at least one gripping lever (277).

7. A connection system (2) according to claim 5 or 6, wherein said second connector (22) comprises retaining means which can be deactivated manually and which interfere with the movement of said annular coupling flange (224A).

8. A cooking appliance comprising a connection system (2) according to one or more of the preceding claims.

## Patentansprüche

1. Verbindungssystem (2) zum Beschicken mit Fluiden vom Typ, welcher ein erstes (21) und ein zweites (22) Verbindungselement umfasst, welche miteinander in Eingriff gebracht werden können, um die Fluidverbindung zu erzeugen, wobei die Fluidverbindung erhalten wird, indem jeweilige Durchgänge für das Fluid innerhalb der ersten und zweiten Verbindungselemente (21, 22) durch erste und zweite Verschlüsse (212, 225) geöffnet werden, welche in dem ersten (21) und dem zweiten (22) Verbindungselement vorgesehen sind, wobei die Verschlüsse bewegbar zum Öffnen des Durchgangs sind, sobald ein geschlossener Kanal für das Fluid gebildet worden ist, und wobei das erste (21) und das zweite (22) Verbindungselement jeweils erste (210) und zweite (220) elektrische Anschlüsse umfassen, welche dazu eingerichtet sind, in einen Zustand gegenseitigen elektrischen Kontakts versetzt zu werden, wodurch eine elektrische Verbindung erzeugt wird,
**dadurch gekennzeichnet, dass**
der erste (210) und der zweite (220) elektrische Anschluss dazu eingerichtet sind, in einen Zustand gegenseitigen elektrischen Kontakts versetzt zu werden, wenn die beiden Verbindungselemente (21, 22) in Eingriff stehen.

2. Verbindungssystem (2) nach Anspruch 1, wobei der erste (212) Verschluss dazu gebracht wird, den jeweiligen Durchgang mittels fest angebrachter Komponenten (222) zu öffnen, welche in dem zweiten Verbindungselement (22) vorgesehen sind, und der zweite Verschluss (225) dazu gebracht wird, den jeweiligen Durchgang mittels fest angebrachter Komponenten (211) zu öffnen, welche in dem ersten Verbindungselement (21) vorgesehen sind.

3. Verbindungssystem (2) nach Anspruch 1 oder 2, wobei die ersten und zweiten Verbindungselemente (21, 22) in der Eingriffsposition mittels beweglicher Festsetz-Mittel (234) festgesetzt werden können.

4. Verbindungssystem (2) nach Anspruch 3, wobei die Festsetz-Mittel (234) dazu gebracht werden, den Eingriff zwischen den ersten (21) und den zweiten (22) Verbindungselementen im Wesentlichen gleichzeitig mit dem gegenseitigen Annähern der ersten und zweiten elektrischen Anschlüsse (210, 220) festzusetzen.

5. Verbindungssystem (2) nach einem oder mehreren der vorhergehenden Ansprüche, wobei das zweite Verbindungselement (22) einen ringförmigen Kopplungsflansch (224A) umfasst, welchem die zweiten elektrischen Anschlüsse (220) zugeordnet sind, welcher dazu eingerichtet ist, sich axial wenigstens während eines Schritts eines Lösens des ersten Verbindungselements (21) von dem zweiten Verbindungselement (22) zu bewegen, und wobei die axiale Bewegung des ringförmigen Kopplungsflanschs (224A) in drei einzelne Momente oder Takte unterteilt ist:
- einen ersten Takt, welcher dem Lösen des elektrischen Kontakts zwischen den elektrischen Anschlüssen (210, 220) entspricht
- einen zweiten Takt, welcher dem Auseinander-Bewegen der elektrischen Anschlüsse (210, 220) entspricht
- einen dritten Takt, welcher dem Freigeben des Eingriffs zwischen dem ersten (21) und dem zweiten (22) Verbindungselement entspricht.

6. Verbindungssystem (2) nach dem vorhergehenden Anspruch, wobei die drei Takte durch einen einzelnen Bedienschritt erhalten werden, welcher durch ein Einwirken auf wenigstens einen Griffhebel (277) ausgeführt wird.

7. Verbindungssystem (2) nach Anspruch 5 oder 6, wobei das zweite Verbindungselement (22) Haltemittel umfasst, welche manuell deaktiviert werden können, und welche mit der Bewegung des ringförmigen Kopplungsflanschs (224A) wechselwirken.

8. Kochgerät umfassend ein Verbindungssystem (2) nach einem oder mehreren der vorhergehenden Ansprüche.

## Revendications

1. Système de raccord (2) destiné à fournir des fluides, du type comportant un premier (21) et un second connecteurs (22), lesquels peuvent être engagés ensemble en vue d'établir le raccord fluidique, dans lequel ledit raccord fluidique est obtenu à travers des passages respectifs pour ledit fluide qui sont ouverts à l'intérieur dudit premier et dudit second connecteurs (21, 22) par des premier et second éléments obturateurs (212, 225) contenus dans ledit premier (21) et ledit second (22) connecteurs, lesdits éléments obturateurs pouvant être déplacés pour ouvrir ledit passage une fois qu'un conduit fermé a été formé pour ledit fluide, et dans lequel ledit premier (21) et ledit second (22) connecteurs comportent, respectivement, des premières (210) et des secondes (220) bornes électriques conçues pour être placées dans une situation de contact électrique mutuel, établissant ainsi une connexion électrique,
**caractérisé en ce que**
ladite première (210) et ladite seconde (220) bornes électriques sont adaptées pour être placées dans une situation de contact électrique mutuel lorsque les deux connecteurs (21, 22) sont engagés.

2. Système de raccord (2) selon la revendication 1, dans lequel ledit premier (212) élément obturateur est fabriqué en vue d'ouvrir le passage respectif par l'intermédiaire des éléments fixes (222) contenus dans le second connecteur (22) et ledit second élément obturateur (225) est fabriqué en vue d'ouvrir le passage respectif par l'intermédiaire des éléments fixes (211) contenus dans le premier connecteur (21).

3. Système de raccord (2) selon la revendication 1 ou 2, dans lequel lesdits premier et second connecteurs (21, 22) peuvent être verrouillés dans la position d'engagement par des moyens de verrouillage mobiles (234).

4. Système de raccord (2) selon la revendication 3, dans lequel lesdits moyens de verrouillage (234) sont fabriqués en vue de verrouiller l'engagement entre ledit premier (21) et ledit second (22) connecteurs, essentiellement, de façon simultanée au rapprochement l'une de l'autre de ladite première et de ladite seconde bornes électriques (210, 220).

5. Système de raccord (2) selon l'une ou plusieurs des revendications précédentes, dans lequel ledit second connecteur (22) comporte une bride de couplage annulaire (224 A) avec laquelle lesdites secondes bornes électriques (220) sont associées, laquelle est conçue pour se déplacer axialement au moins pendant une étape de découplage dudit premier connecteur (21) d'avec ledit second connecteur (22) et dans lequel ledit déplacement axial de ladite bride de couplage annulaire (224A) est subdivisée en trois moments ou en trois phases distinctes
- une première phase correspondant à la déconnexion du contact électrique entre lesdites bornes électriques (210, 220) ;
- une deuxième phase correspondant à l'éloignement les unes des autres desdites bornes électriques (210, 220) ;
- une troisième phase correspondant à l'engagement entre ledit premier (21) et ledit second (22) connecteurs qui sont déverrouillés.

6. Système de raccord (2) selon la revendication précédente, dans lequel lesdites trois phases sont obtenues en une seule opération réalisée en agissant sur au moins un levier de commande (277).

7. Système de raccord (2) selon la revendication 5 ou 6, dans lequel ledit second connecteur (22) comporte des moyens de retenue qui peuvent être désactivés manuellement et qui interfèrent avec le déplacement de ladite bride de couplage annulaire (224A).

8. Appareil de cuisson comportant un système de raccord (2) selon une ou plusieurs des revendications précédentes.
